# EUROPÄISCHE PATENTANMELDUNG

(11) **EP 3 603 567 A1**
(43) Veröffentlichungstag der Anmeldung: **05.02.2020**
(21) Anmeldenummer: 18187282.1
(22) Anmeldetag: 03.08.2018
(51) Int. Cl.: A61C 13/24, A61C 13/25

(54) **PROTHESE SOWIE NACHRÜSTSET FÜR EINE PROTHESE**

(71) Anmelder: Ivoclar Vivadent AG, 9494 Schaan (LI)
(72) Erfinder: Häfele, Clemens Andreas, 6837 Weiler (AT); Hagenbuch, Konrad, 9469 Haag (CH); Frei, Roger, 9436 Balgach (CH); Krybus, Robert Wolfgang, 9479 Oberschaan (CH)
(74) Vertreter: Baronetzky, Klaus

(57) **Zusammenfassung**

Die Erfindung betrifft eine Dentalprothese, mit einer Prothesenbasis und Zähnen, die in oder an der Prothesenbasis (14) befestigt sind, wobei die Prothesenbasis (14) ein Belüftungselement, insbesondere ein Belüftungsventil (12) aufweist.

## Beschreibung

Die Erfindung betrifft eine Dentalprothese, gemäß dem Oberbegriff von Anspruch 1 und, sowie einen Nachrüstsatz für eine Dentalprothese, gemäß dem Oberbegriff von Anspruch 16.

Es ist seit langem bekannt, dass Dentalprothesen für die Realisierung eines guten Tragekomforts eine möglichst gute Genauigkeit der Passform zu den Kieferkämmen und zum Gaumen haben sollten.

Eine ältere Lösung ist aus der US 20 29 945 A1 bekannt geworden. Bei dieser Prothese ist am Kieferkamm ein Ventil seitlich ausgebildet, das die Saugwirkung der Prothes am Kieferkamm unterstützen soll, um eine bessere Haftung der Prothese zu ermöglichen.

In neuerer Zeit gelang es, die Genauigkeit der Passform durch digitale Techniken noch weiter zu verbessern. Die Prothese wird dann - gerade als Oberkieferprothese mit einer vergleichsweise großen Auflagefläche - als weniger unangenehm empfunden. Zudem saugt sie sich besser an der Auflagefläche fest, so dass sie sich nicht unbeabsichtigt löst.

Dies gilt in besonderem Maße für Vollprothesen,

Durch die erhöhte Saugkraft lässt sich die Prothese dann allerdings schlechter lösen.

Es ist bereits vorgeschlagen worden sind, am Rand der Prothese einen Spalt zur Auflagefläche hin auszubilden, damit der Patient dort mit dem Finger eingreifen kann und so die Prothese leichter lösen kann. Dies führt jedoch leider dazu, dass sich Speisereste in dem Spalt sammeln, was einerseits unhygienisch ist und andererseits die Haftung der Prothese insgesamt beeinträchtigt.

Daher liegt der Erfindung die Aufgabe zugrunde, eine Dentalprothese gemäß dem Oberbegriff von Anspruch 1 sowie einen Nachrüstsatz für eine Dentalprothese gemäß dem Oberbegriff von Anspruch 16 zu schaffen, die hinsichtlich der Handhabung und Effizienz verbessert ist, ohne den Tragekomfort zu beeinträchtigen

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass die Prothesenbasis mit einem Belüftungselement versehen ist. Unter Belüftung ist hier die Luftzufuhr zu der zahnabgewandten Seite der Prothese zu verstehen.

Das Belüftungselement ist bevorzugt zentral in der Prothesenbasis angeordnet. Auch wenn der Durchmesser des Belüftungselements z.B. nur 5mm oder weniger als 1 cm beträgt, reicht die Belüftung dieses Bereichs aus, um die Saugwirkung der Prothese aufzuheben und die Prothese leicht zu lösen.

Eine Oberkieferprothese kann beispielsweise an der höchsten Stelle ein Belüftungselement aufweisen. Das Belüftungselement lässt bei Betätigung Luft an einer Stelle zum Gaumen gelangen. Von dort gelangt die Luft auch in umgebende Bereiche des Gaumens, so dass der dort bestehende Unterdruck aufgehoben wird.

Erfindungsgemäß günstig ist es, wenn das Belüftungselement als Ventil, also als Belüftungsventil, ausgebildet ist. Die Betätigung kann dann manuell oder automatisch erfolgen. Beispielsweise ist es möglich, das Ventil so auszugestalten, dass durch Druck auf einen Ventilkörper des Ventils, wie er beispielsweise mit einem Finger ausgeübt werden kann, der Ventilkörper so verschoben wird, dass sich das Ventil öffnet.

Der Ventilkörper verschließt die Ventilöffnung, sobald der Druck entfernt wird.

Es sind aber auch andere Ausgestaltungen des Belüftungselement möglich. So kann eine Belüftungsöffnung kurzerhand mit einem Stöpsel, einem Schieber oder einer Klappe verschließbar sein. Diese Elemente lassen sich von Hand entfernen, um die Belüftung der Prothese zu ermöglichen.

In einer weiteren Ausgestaltung ist eine magnetische Betätigung des Ventilkörpers vorgesehen. Dieser weist hierzu ferromagnetisches Material auf. Über einen kleinen Magnetstift oder einen beliebigen Permanentmagneten lässt sich der Ventilkörper bewegen und damit das Ventil öffnen.

Das erfindungsgemäße Belüftungsventil kann auch vorgefertigt sein und in eine Form vorder Herstellung der Prothesenbasis eingesetzt werden, damit es während des Spritzgießvorgangs umspritzt wird.

Bei abtragende Verfahren zur Herstellung der Prothesenbasis, beispielsweise beim Fräsen, lässt sich das Belüftungsventil auch bereits im Rohling realisieren.

Alternativ ist es auch möglich, die Ventilöffnung zu fräsen und den Ventilkörper im Nachhinein einzusetzen.

Das Einsetzen des Ventilkörper ist erfindungsgemäß bevorzugt von der Gaumenseite, also der Zahn abgewandten Seite möglich. Bei eingesetzter Prothese lässt sich dann der Ventilkörper nicht entfernen, und ist insofern verschlucksicher gehalten.

In einer weiteren bevorzugten Ausgestaltungen ist das Ventil als Automatikventil mit Hysterese ausgebildet. Das Ventil öffnet bei einem Öffnungsdruck und schließt bei einem Schließdruck, wobei der Schließdruck geringer als der Öffnungsdruck ist. Mit dieser Lösung lässt sich ein automatisches Festsaugen der Prothese, insbesondere der Oberkieferprothese, realisieren.

In einer weiteren Ausgestaltung ist das Belüftungselement als Pumpe ausgebildet, die Luft in die erwünschte Richtung pumpen kann.

In einer weiteren vorteilhaften Ausgestaltung ist das Ventil als Elektromagnetventil ausgebildet, wobei die Steuerung durch den Patienten über ein beliebiges geeignetes Betätigungselement möglich ist.

Bevorzugt ist das Belüftungsventil ein Rückschlagventil, das öffenbar ist, so dass zugleich auch ein Entlüften beim Einsetzen der Prothese möglich ist.

Es ist bevorzugt, dass sich das Belüftungselement im Wesentlichen bündig zur Zahnseite der Prothese erstreckt. Hierdurch lassen sich Zungenirritationen weitgehend vermeiden.

Nachdem der Ventilkörper zur Gaumenseite hin entnehmbar ist an, lässt er sich auch leicht reinigen, ebenso wie die Ventilöffnung nach Entnahme des Ventilkörpers.

Weitere Vorteile, Einzelheiten und Merkmale ergeben sich aus der nachfolgenden Beschreibung mehrerer Ausführungsbeispiele der Erfindung anhand der Zeichnung.

Es zeigen:
Fig. 1 eine Draufsicht auf eine erfindungsgemäße Dentalprothese von der Zahnseite aus, in einer ersten Ausführungsform;
Fig. 2 einen Schnitt durch ein Belüftungsventil in einer weiteren Ausführungsform der erfindungsgemäßen Prothese; und
Fig. 3 eine Draufsicht auf das Belüftungsventil gemäß Fig. 2.

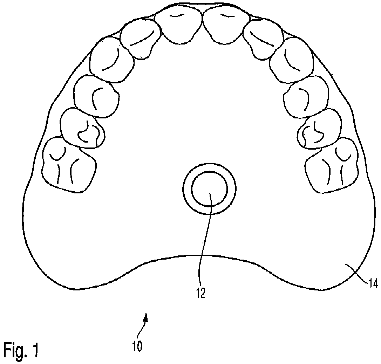

In Fig. 1 ist eine Dentalprothese 10 dargestellt, im Beispielsfall eine Oberkieferprothese. Die Prothesenbasis 14 weist zentral ein Belüftungsventil 12 als Belüftungselement auf.

Das Belüftungsventil 12 weist einen Ventilkörper 16 auf, der in oder an einer Ventilöffnung beweglich geführt ist. In einer Position liegt der Ventilkörper an der Ventilöffnung an, so dass das Ventil 12 geschlossen ist. In der anderen Positionen besteht ein Spalt zwischen dem Ventilkörper 16 und der Ventilöffnung, so dass Luft durch das Ventil 12 hindurchströmen kann.

In bevorzugter Ausgestaltung ist die geschlossene Position federbelastet, so dass sich das Ventil 12 selbsttätig schließt und bei Betätigung durch den Patienten öffnet.

Die Öffnung bewirkt, dass Luft vom Mundinnenraum nach oben, also zum Gaumen des Patienten hin, strömen kann und den dort bestehenden Unterdruck aufhebt.

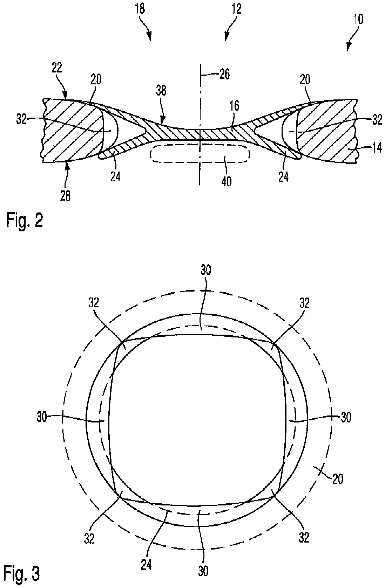

Eine mögliche Ausgestaltung eines Belüftungsventils 12 ist in Fig. 2 dargestellt.

Fig. 2 zeigt einen Teil einer erfindungsgemäßen Dentalprothese 10 mit dem Belüftungsventil 12.

Das Belüftungsventil 12 ist in einer Prothesenbasis 14 eingebaut. Es weist einen elastischen Ventilkörper 16 auf, der eine Ventilöffnung 18 abdeckt.

Hierzu weist der Ventilkörper 16 eine umlaufende Ventilkörperlippe 20 auf, die auf einer Zahnseite 22 der Prothesenbasis kreisförmig um die Ventilöffnung 18 herum aufliegt und dort abdichtet.

Das Ventil 12 bildet insofern an der Ventilkörperlippe 20 ein Einwegventil oder Rückschlagventil aus, das bei Überdruck an einer zahnabgewandten Seite 28 der Prothesenbasis gegenüber dem Druck an der Zahnseite 22 öffnet und diesen abläßt und bei Unterdruck dort sperrt.

Der Ventilkörper 16 weist ferner einen Gegenhalteflansch 24 auf, der sich ebenfalls kreisförmig erstreckt, aber, von der Ventilkörperlippe 20 in Richtung parallel zu einer Ventilachse 26 betrachtet, beabstandet ist und an der zahnabgewandten Seite 28 der Prothesenbasis 14 am Umfang der Ventilöffnung 18 ebenfalls anliegt.

Mit der Kombination aus Gegenhalteflansch 24 und Ventilkörperlippe 20 ist der Ventilkörper 16 an der Ventilöffnung unverlierbar gehalten.

Die Ventilöffnung 18 ist in besonderer Weise ausgebildet. Sie weist - wie aus Fig. 3 ersichtlich ist - radial vorspringende Bereiche 30 und radial auswärts zurückspringende Bereiche 32 auf. Diese wechseln einander - in Umfangsrichtung der Ventilöffnung 18 betrachtet - ab.

Im Beispielsfalle sind je vier einander abwechselnde rückspringende Bereiche 32 und vorspringende Bereiche 30 vorgesehen, wobei es sich versteht, dass auch eine beliebige andere Anzahl, beispielsweise 8 oder 10 entsprechende Bereiche ausgebildet sein können, wobei der Rand der Ventilöffnung in der Draufsicht betrachtet auch wellenförmig ausgebildet sein kann.

Das Belüftungsventil 12 ist durch zentralen Druck auf ein Betätigungselement 38 an seiner Oberseite manuell zu öffnen. Der Ventilkörper 16 verformt sich dergestalt, dass die Ventilkörperlippe 20 an den Bereichen 30 sich stärker radial einwärts abstützt und radial außen dementsprechend abgehoben wird. Durch dieses Abheben werden die radial äußeren Bereiche 32 (vergleiche Fig. 3) geöffnet, und Luft kann von der Zahnseite 22 zur zahnabgewandten Seite 28 strömen, so dass die Prothese belüftet wird und leicht entnommen werden kann.

Der Ventilkörper 16 ist so ausgebildet, dass er aus einem elastischen Material besteht, elastischer jedenfalls als die Prothesenbasis 14 und in entspanntem Zustand durch Vorspannung zwischen Gegenhalteflansch 24 und Ventilkörperlippe 20 Zustand anliegt.

Das erfindungsgemäße Belüftungsventil 12 weist in der hier dargestellten Ausführungsform zusätzlich eine Entlüftungsfunktion auf. Beim Andruck der Prothese an den Gaumen an der hier als zahnabgewandten Seite 28 bezeichneten Seite wird an der zahnabgewandten Seite 28 der Prothesenbasis 14 im Bereich des Luftpolsters 40 Überdruck im Vergleich mit der Zahnseite 22 erzeugt. Dieser Überdruck kann leicht über die Ventilkörperlippe 20 abgelassen werden, nachdem die Unterseite der Ventilkörperlippe aufgrund der radial zurückspringenden Bereiche 32 mit der zahnabgewandten Seite 28 der Prothesenbasis in Strömungsverbindung steht.

Bei einer entsprechenden Schluckbewegung des Patienten wird an der Zahnseite 22 Unterdruck erzeugt, der zum Luftablass aus dem Bereich des Luftpolsters 40 durch das so als Entlüftungsventil wirkende Ventil 12 führt.

Durch das Andrücken der präzise gefertigten Prothese haftet diese besonders gut am Gaumen des Patienten, lässt sich aber durch Druck auf das Betätigungselement 38 am zentralen Bereich auf der Oberseite des Ventilkörpers 16 öffnen und damit entnehmen.

## Patentansprüche

1. Dentalprothese, mit einer Prothesenbasis und Zähnen, die in oder an der Prothesenbasis (14) befestigt sind, **dadurch gekennzeichnet, dass** die Prothesenbasis (14) ein Belüftungselement, insbesondere ein Belüftungsventil (12) aufweist.

2. Dentalprothese nach Anspruch 1, **dadurch gekennzeichnet, dass** das Belüftungselement sich zwischen einer Zahnseite (22) und einer zahnabgewandten Seite (28) der Prothesenbasis (14) erstreckt und ein Betätigungselement (38) für die manuelle Betätigung des Belüftungselements aufweist.

3. Dentalprothese nach einem der vorhergehenden Ansprüche, **dadurch gekennzeichnet, dass** ein Druck auf ein Betätigungselement (38) des als Belüftungsventils (12) ausgebildeten Belüftungselement das Belüftungsventils (12) öffnet.

4. Dentalprothese nach einem der vorhergehenden Ansprüche, **dadurch gekennzeichnet, dass** das Belüftungsventil (12) im Ruhezustand unter Vorspannung geschlossen ist und gegen die Vorspannung zu öffnen ist.

5. Dentalprothese nach einem der vorhergehenden Ansprüche, **dadurch gekennzeichnet, dass** das Belüftungsventil (12) an einer Oberkiefer-Prothese zentral ausgebildet ist und sich zwischen einer Gaumenseite und einer Zahnseite der Prothese erstreckt.

6. Dentalprothese nach einem der Ansprüche 1 bis 4, **dadurch gekennzeichnet, dass** das Belüftungsventil sich zwischen einer Kieferkammseite der Prothese und einer Zahnseite der Prothese erstreckt und insbesondere mindestens zwei Belüftungsventile voneinander beabstandet ausgebildet sind.

7. Dentalprothese nach einem der vorhergehenden Ansprüche, **dadurch gekennzeichnet, dass** das Belüftungsventil (12) mit einem insbesondere als Rückschlagventil ausgebildetes Entlüftungsventil (12) kombiniert ausgebildet ist, über welches ein Luftpolster (49) an einer zahnabgewandten Seite (28) der Prothesenbasis (14) entlüftbar ist.

8. Dentalprothesen nach einem der vorhergehenden Ansprüche, **dadurch gekennzeichnet, dass** ein Ventilkörper (16) des Belüftungsventils (12) gegenüber der Prothesenbasis (14) beweglich gelagert ist und Teil sowohl des Belüftungsventils (12) als auch eines Entlüftungsventils (12) ist.

9. Dentalprothesen nach einem der vorhergehenden Ansprüche, **dadurch gekennzeichnet, dass** das Belüftungsventil mit einem Entlüftungsventil kombiniert ist und dass sowohl das Belüftungsventil als auch das Entlüftungsventil unter Vorspannung je automatisch schließen und lediglich das Belüftungsventil durch manuelle Betätigung zu öffnen ist.

10. Dentalprothesen nach einem der vorhergehenden Ansprüche, **dadurch gekennzeichnet, dass** das Belüftungsventil (12) einen Ventilkörper (16) aufweist, der in einer Ventilöffnung (18), die als Durchtrittsausnehmung in der Prothesenbasis (14) ausgebildet ist, unverlierbar gehalten ist.

11. Dentalprothesen nach einem der vorhergehenden Ansprüche, **dadurch gekennzeichnet, dass** der Ventilkörper (16) des Belüftungsventils (12) sich sowohl an der Zahnseite (22) der Prothesenbasis (14) als auch an der zahnabgewandten Seite (28) der Prothesenbasis (14) über die Ventilöffnung (18) in der Prothesenbasis (14) hinaus erstreckt und dort im Ruhezustand anliegt.

12. Dentalprothesen nach einem der vorhergehenden Ansprüche, **dadurch gekennzeichnet, dass** ein Ventilkörper (16) des Belüftungsventils (12) und gegebenenfalls des Entlüftungsventils (12) in einer Ventilkörperlippe (20) endet, die sich auf der Zahnseite (22) der Prothesenbasis (14) erstreckt und die Ventilöffnung (18) nach der Art einer Saugnapflippe abdeckt und schließt.

13. Dentalprothesen nach einem der vorhergehenden Ansprüche, **dadurch gekennzeichnet, dass** der Ventilkörper (16) sich durch Druck auf ein Betätigungselement (38) des Ventilkörpers (16) von der Zahnseite (22) der Prothesensbasis (14) her verformt.

14. Dentalprothesen nach einem der vorhergehenden Ansprüche, **dadurch gekennzeichnet, dass** die Ventilkörperlippe (20) durch Druck auf ein Betätigungselement (38) des Ventilkörpers (16) von der Zahnseite (22) der Prothesenbasis von der Prothesenbasis abgehoben wird und das Ventil (12) öffnet.

15. Dentalprothesen nach einem der vorhergehenden Ansprüche, **dadurch gekennzeichnet, dass** das kombinierte Be- und Entlüftungsventil (12) mit einer vorgegebenen Vorspannung des Ventilkörpers (16) und mit seiner Ventilkörperlippe (20) an der Prothesenbasis (14) anliegt, die einem vorgegebenen Öffnungsdruck entspricht, bei welchem das Ventil öffnet, welcher Öffnungsdruck zwischen 50 mbar und 300 mbar beträgt.

16. Nachrüstsatz für eine Dentalprothese, welche eine Prothesenbasis aufweist, **gekennzeichnet durch** einen Ventilkörper (16), der in eine in die Prothesenbasis einzubringende Ventilöffnung (18) einsetzbar ist, oder durch die Kombination eines Ventilkörpers (16) mit einem Ventilsitz, die zueinander passend vorgefertigt sind, wobei der Ventilsitz in die Prothesenbasis (14) eine dort einzubringende Bohrung einbringbar und dort insbesondere durch Kleben oder Polymerisieren befestigbar ist.
